# FASCICULE DE BREVET EUROPEEN

(11) **EP 3 003 200 B1**
(45) Date de publication et mention de la délivrance du brevet: **03.01.2018**
(21) Numéro de dépôt: 14738542.1
(22) Date de dépôt: 28.05.2014
(51) Int. Cl.: A61C 5/42

(54) **INSTRUMENT CANALAIRE DE SECTION OVOÏDE OU OVALE**
WURZELKANALINSTRUMENT MIT EINEM OVALEN ODER EIFÖRMIGEN ABSCHNITT
ROOT CANAL INSTRUMENT HAVING AN OVOID OR OVAL SECTION

(30) Priorité: 30.05.2013 FR 1301230
(43) Date de publication de la demande: 13.04.2016
(73) Titulaire: MICRO MEGA INTERNATIONAL MANUFACTURES SA, 25000 Besançon (FR)
(72) Inventeur: LEVY, Guy, F-13008 Marseille (FR)
(74) Mandataire: Rhein, Alain
(86) Numéro de dépôt international: PCT/FR2014/051277
(87) Numéro de publication internationale: WO 2014/191694

(56) Documents cités:
- EP-A1- 1 634 535
- WO-A1-99/60945
- WO-A2-01/93773
- FR-A1- 2 751 524
- FR-A1- 2 861 287
- GB-A- 1 255 875
- US-A1- 2003 017 434

## Description

### Domaine technique et état de l'art

L'invention concerne un instrument canalaire destiné à préparer un logement pour un pivot à l'intérieur des racines dentaires.
Les dents dépulpées nécessitent souvent la mise en place par scellement ou vissage d'un pivot pour soutenir une restauration de la couronne. Pour cela, il est connu de forer dans le canal de la racine un espace à l'aide de forets ronds dont la coupe s'effectue en rotation à l'aide de contre-angles ou pièces à main. La préparation est donc ronde et s'effectue au dépens des parois du canal et ne respecte pas l'anatomie des racines en particulier celles plates ou courbes, ces forets étant rigides et rectilignes. La mise en oeuvre en rotation de ces instruments peut aboutir à des fragilisations des parois surtout les parois mésiales ou les parois distales, et peuvent aboutir par la suite à des fractures ou au cours de la préparation à des perforations compromettant l'avenir de l'organe dentaire. L'espace crée au cours de la préparation canalaire est ensuite équipé d'un pivot de section ronde, normalisé aux dimensions du foret en particulier de sa section ronde. FR2751524 A1 décrit un instrument canalaire dont la partie travaillante est en forme de biseau et est pourvue d'une lame hélicoïdale, tel que l'enveloppe du biseau selon une coupe transversale comprend une portion de courbe antérieure et une portion de courbe postérieure réunies par deux portions de courbes latérales, le rayon de courbure de la portion antérieure étant égal à celui de la portion postérieure.

### Description de l'invention

L'invention propose un nouvel instrument, ne présentant pas tout ou partie des inconvénients des instruments existants. Plus précisément, l'invention propose un nouvel instrument canalaire caractérisé en ce qu'il comporte une partie travaillante s'étendant selon un axe longitudinal, une enveloppe tronconique de la partie travaillante ayant, selon une coupe transversale, une section du type comprenant une portion de courbe antérieure et une portion de courbe postérieure réunies par deux portions de courbe latérales, un rayon de courbure de la portion antérieure étant supérieur ou égal à un rayon de courbure de la portion supérieure.
Le nouvel instrument, avec sa section non plus circulaire mais au contraire plus ou moins aplatie, permet de réaliser des préparations en harmonie avec l'anatomie radiculaire en particulier avec celle des racines qui sont de section ovoïdes ou aplaties et d'éviter la fragilisation des parois en effectuant une préparation orientée vers des zones de sécurité plus épaisses de la racine. En fonction de la forme des racines, la section de l'instrument sera choisie ovoïde, elliptique, oblongue ou plus généralement telle que définie ci-dessus.
Dans l'instrument selon l'invention, l'enveloppe prise dans son ensemble comprend une face antérieure et une face postérieure réunies par deux faces latérales, la face antérieure et la face postérieure correspondant aux zones de l'enveloppe les plus éloignées l'une de l'autre ; chaque face s'étend tout le long de l'enveloppe et a dans un plan transversal une section en forme de portion de courbe, selon le cas, portion antérieure, portion postérieure et portions latérales respectivement telles que définies ci-dessus.
De préférence, par exemple pour des racines présentant des zones planes, on peut choisir un instrument selon l'invention dont les deux faces latérales sont planes.

L'instrument selon l'invention comporte de préférence, tout au long de la partie travaillante, une ou des lames permettant une coupe des parois canalaires lors d'un déplacement longitudinal alternatif du dit instrument. Ainsi l'instrument coupe la dentine des parois canalaires lors de mouvements longitudinaux alternatifs et non plus en coupe par rotation de l'instrument. Ce mouvement longitudinal alternatif peut se réaliser manuellement, l'instrument étant tenu entre les doigts, ou de façon automatisée à l'aide d'un contre angle imprimant à l'instrument un mouvement alternatif longitudinal d'amplitude variable tel que décrit par Levy dans le brevet FR 2563101 intitulé "Tête d'entrainement pour instruments d'interventions endodontiques" et publié le 1985-10-25. De préférence, l'instrument selon l'invention est pourvu de lames reproduisant les caractéristiques d'une lime de type K, donc actives longitudinalement dans les deux sens, ou reproduisant les caractéristiques des limes d'Hedstroem.
Les racines mésiales et distales des molaires inférieures et supérieures ont des canaux ovoïdes ou plats sur des racines de même forme avec des parois vestibulaires particulièrement épaisses, des faces linguales un peu moins épaisses. Nous retrouvons cette particularité sur les prémolaires inférieures et supérieures ou sur les incisives inférieures et les canines. Ainsi pour la réalisation d'un espace pour un pivot dans ce type de racine, il est préférable de le prévoir au dépens de la paroi la plus épaisse c'est-à-dire de la paroi vestibulaire et de façon plus mesurée au dépens de la paroi linguale ou palatine enfin d'une façon limitée au dépens des parois mésiales ou distales pour éviter une perforation de la paroi sur le parodonte. A cet effet, un instrument selon l'invention peut présenter dans la partie travaillante des lames plus profondes et plus actives sur la face antérieure et la face postérieure par rapport aux lames présentes sur les faces latérales. Ainsi, la coupe s'effectue de façon préférentielle sur les parois vestibulaires, d'une façon plus mesurée sur la paroi linguale ou palatine et enfin de façon limitée sur les faces mésiales et distales.
Longitudinalement un instrument selon l'invention a par exemple une partie active de 12 millimètres de longueur, la pointe étant de préférence mousse et plus généralement non coupante. Cette longueur totale de la partie travaillante peut être plus généralement de l'ordre de 10 à 16 millimètres pour répondre à des utilisations d'instruments sur racines courtes ou longues.
Selon une variante, l'instrument comprend au moins une lame hélicoïdale s'étendant depuis un talon (i.e. l'extrémité de préhension ou de connexion à un outil d'entraînement) jusqu'à une pointe (i.e. l'extrémité libre) de la partie travaillante de l'instrument. Selon une autre variante, l'instrument comprend une pluralité de lames réparties le long de la partie travaillante, chaque lame s'étendant dans un plan non plus non parallèle à l'axe longitudinal et de préférence dans un plan sensiblement perpendiculaire à l'axe longitudinal.
De préférence encore, la ou les lames sont moins profondes à la pointe qu'au talon de la partie travaillante. Dit autrement, la profondeur de la ou des lames augmente depuis la pointe de la partie travaillante jusqu'au talon de la partie travaillante. Ceci permet de débuter l'élargissement du canal avec des lames peu actives puis d'augmenter l'effort exercé sur la paroi du canal au fur et à mesure de la pénétration de l'instrument dans le canal. Un pivot normalisé aux dimensions de la partie travaillante d'un instrument selon l'invention tel que décrit ci-dessus, peut se loger très exactement dans l'espace créé dans les racines par le dit instrument.

Un tel pivot est de préférence réalisé en alliage d'acier et de Titane, ou bien en matériau plastique, en résine ou en matériau calcinable.

### Brève description des figures

L'invention sera mieux comprise, et d'autres caractéristiques et avantages de l'invention apparaîtront à la lumière de la description qui suit d'exemples de réalisation d'un instrument selon l'invention. Ces exemples sont donnés à titre non limitatif. La description est à lire en relation avec les dessins annexés dans lesquels :
- la figure 1 montre un instrument selon l'invention, en vue de face,
- les figures 2a, 3a, 4a, 5a montrent différents exemples de section de l'instrument de la figure 1, à proximité de la pointe de l'instrument (coupe A-A)
- les figures 2b, 3b, 4b, 5b montrent différents exemples de section de l'instrument de la figure 1, à proximité du talon de l'instrument (coupe B-B), et
- les figures 6 à 10 montrent des variantes des instruments des figures 1 à 5.

### Description d'un mode de réalisation de l'invention

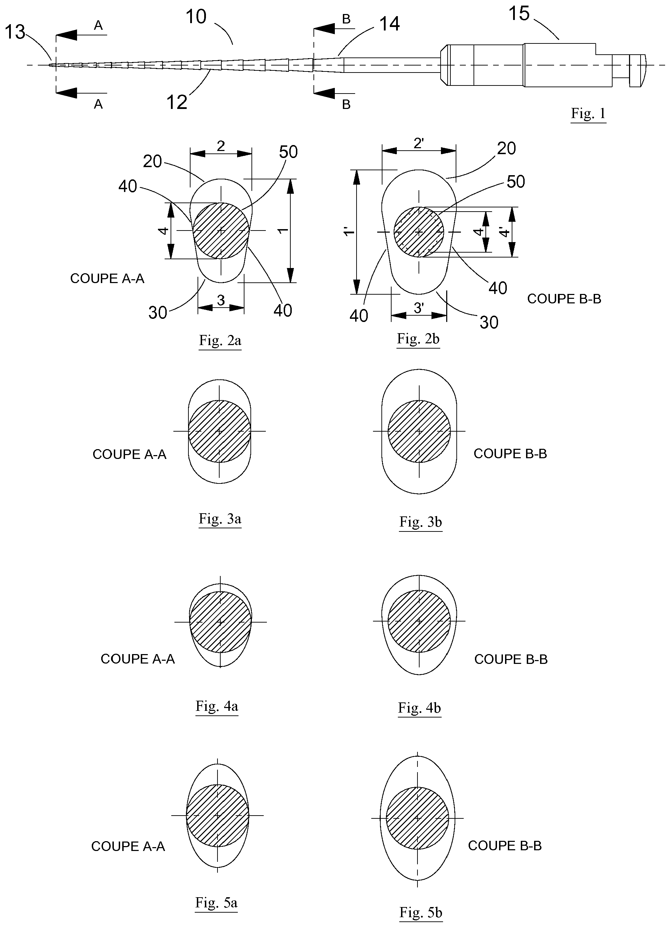

La figure 1 montre, à titre d'exemple, un instrument 10 selon l'invention comprenant une partie travaillante 12 taillée de 10 millimètres de longueur s'étendant selon un axe longitudinal, partie travaillante comprenant une pointe 13 et un talon 14, talon prolongé par un manche 15 de préhension ou de connexion à un outil d'entraînement.

Selon l'invention, une enveloppe tronconique de la partie travaillante a selon une coupe transversale une section du type comprenant une portion de courbe antérieure 20 et une portion de courbe postérieure 30 réunies par deux portions de courbe latérales 40, un rayon de courbure 2 de la portion antérieure 20 étant supérieur ou égal à un rayon de courbure (3) de la portion supérieure 30.

La figure 2b montre un exemple d'une section (coupe B-B) de l'instrument 10, à proximité du talon de la partie travaillante 12, exemple dans lequel :
- la portion antérieure 20 et la portion postérieure 30 de la section sont des portions de cercle, des demi-cercles plus précisément, le diamètre (= rayon de courbure dans ce cas particulier) 2 de la portion antérieure étant supérieure au diamètre 3 de la portion postérieure 30, et
- les deux portions latérales sont planes et non parallèles.

L'enveloppe globale de la partie travaillante comprend une face antérieure et une face postérieure réunies par deux faces latérales, la face antérieure et la face postérieure correspondant aux zones de l'enveloppe les plus éloignées l'une de l'autre ; chaque face s'étend tout le long de l'enveloppe et a dans un plan transversal une section en forme de portion de courbe, selon le cas, portion antérieure 20, portion postérieure 30 et portions latérales 40 respectivement.

Dans l'exemple de la figure 2b, les deux portions latérales 40 de la section sont planes et non parallèles, et le diamètre 2' de la portion de cercle antérieure 20 est supérieur au diamètre 3' de la portion de cercle postérieure 30 ; la largeur maximale (1') de la section est de 100/100ème de millimètre, la portion de cercle antérieure a un diamètre 2' de 60/100ème de millimètre et portion de cercle postérieur présente un diamètre 3' de 40/100ème de millimètre. Rappelons que la face antérieure instrumente la face vestibulaire des canaux, et la face postérieure instrumente la face linguale du canal c'est-à-dire d'une façon générale, les deux faces correspondant aux épaisseurs les plus importantes des racines.

La figure 2a montre la section du même instrument que celui de la figure 2b mais à proximité de la pointe (coupe A-A) de sa partie travaillante : la section a la même forme que sur la figure 2b mais est plus petite : sa largeur maximale (1) est de 60/100ème de millimètre avec une portion de cercle antérieure de 36/100ème de millimètre de diamètre 2 et une portion postérieure de 24/100ème de millimètre de diamètre 3.

Dans la partie travaillante de l'instrument, des lames sont réalisées par usinage d'un fil plein métallique, par exemple en Nickel-Titane, avec de façon préférable un angle d'hélice de 45° et un angle de coupe positif.

Cet usinage peut être circulaire donnant une âme centrale 50 de 30/100ème de millimètre de diamètre à la pointe de la partie travaillante, ce qui assure des lames profondes et actives sur les faces arrondies de l'instrument et nulles sur une partie des faces latérales et divergentes. Dans l'exemple des figures 2a, 2b, la circonférence de l'âme centrale augmente légèrement depuis la pointe (diamètre 4) jusqu'au talon de la partie travaillante de l'instrument pour atteindre un diamètre 4' de 40/100ème de millimètre ce qui permet de donner des lames peu profondes à la pointe de la partie travaillante d'instrument mais de plus en plus actives en remontant cette partie travaillante, et cela sur les faces latérales de l'instrument.

A partir de l'exemple des figures 1-2, différentes variantes sont possibles, qui peuvent être envisagées seules ou en combinaison.

Par exemple, les portions de cercle 20, 30 de l'instrument peuvent avoir un diamètre 2, 3 égal sur leur demi-cercle, ceci donne des courbes latérales 40 planes parallèles et une section de l'instrument globalement oblongue, comme le montrent les figures 3a et 3b.

Ou bien, l'instrument peut avoir une section de forme ovoïde (fig. 4a-4b) ou elliptique (fig. 5a-5b). De telles formes sont obtenues simplement en choisissant des portions de courbe 20, 30 courtes et des portions de courbe latérales 40 non planes.

Egalement, les largeurs maximales (1 et 1') aux deux extrémités de la partie travaillante (la pointe et le talon) peuvent varier. Par exemple avec des largeurs maximales de 120/100ème à 140/100ème de millimètre pour le talon (1') et de 60 à 80/100ème de millimètre pour la seconde (1).

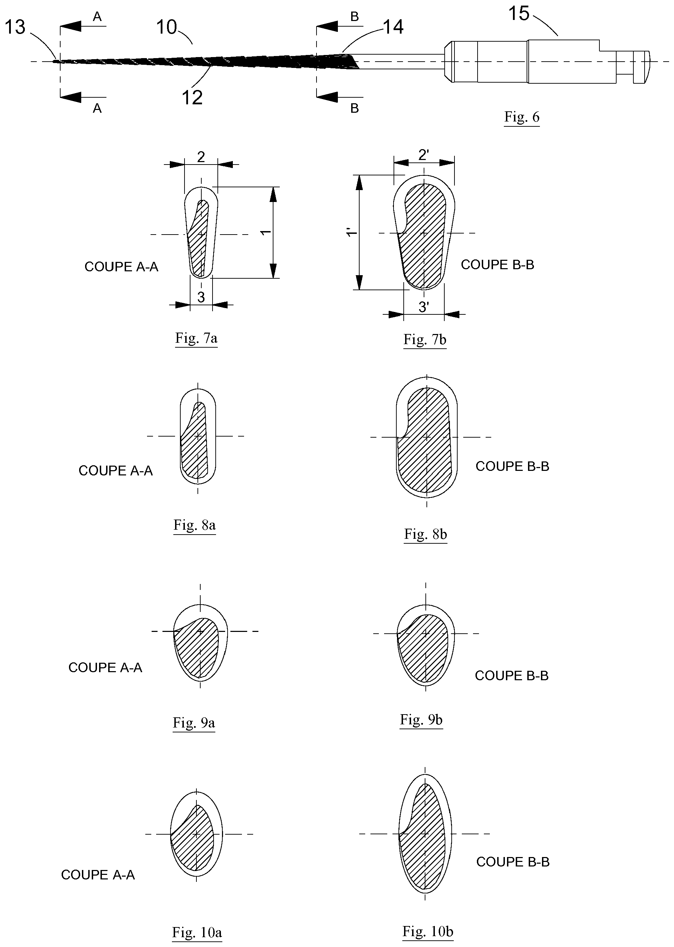

Dans l'exemple de la figure 1, l'instrument comprend une pluralité de lames de coupe réparties le long de la partie travaillante, chaque lame étant taillée dans un plan transversal de la partie travaillante, c'est-à-dire dans un plan perpendiculaire à l'axe longitudinal de l'instrument. Sur les figures 2 à 5 :
- la courbe en trait plein définit la forme de l'enveloppe de la partie travaillante,
- la partie centrale hachurée correspond à l'âme centrale de la partie travaillante après taillage des lames, les coupes A-A et B-B étant réalisées volontairement au niveau d'une lame.
En variante, la figure 6 montre un instrument comprenant une unique lame de coupe de forme hélicoïdale s'étendant depuis le talon jusqu'à la pointe de la partie travaillante. Les figures 7 à 10 montrent différentes sections possibles pour l'instrument de la figure 6 après taillage de la lame avec, comme précédemment :
- en trait plein, la forme de l'enveloppe de la partie travaillante,
- hachurée, l'âme centrale de la partie travaillante.
L'usinage se fait par meulage sur des fils ou tiges pleins en aciers spéciaux, à base d'inox ou à base d'alliage comprenant du titane nickel. Pour créer les lames, cet usinage peut être circulaire, il peut aussi être elliptique ce qui permet de régler la profondeur des lames tout autour de l'instrument. L'usinage terminé, l'instrument pourra subir une courbure de 10° par rapport à l'axe principal du coté mésial vers le coté distal sur son dernier tiers travaillant (côté distal de la lame) pour préparer des canaux courbes : ceci permet de fermer l'angle de coupe des lames du coté interne de la courbure de l'instrument et d'ouvrir l'angle de coupe du coté externe à la courbure de l'instrument ; ceci rend l'instrument moins agressif sur sa face interne et plus agressif sur sa face externe; également, ceci évite les redressements de courbure donc les perforations radiculaires. Un pivot normalisé à la partie travaillante de l'instrument est introduit dans le vide laissé dans la racine pour y être scellé. Ce pivot peut être constitué à partir de matériaux de différentes natures : titane, fibres de verre, matériaux plastiques, résines ou matériaux calcinables. Le pivot comporte une partie intracanalaire et une partie extracanalaire. Cette partie extracanalaire peut renforcer la restauration d'une couronne. Cette partie extracanalaire a des formes et des longueurs différentes et peut être ajustée par meulage.

### Nomenclature

Fig. 1
- 10: instrument
- 12: partie travaillante
- 13: pointe
- 14: talon
- 15: manche

Fig. 2a section à la pointe :
- 1: longueur maximale de la section
- 2: diamètre de la courbure de la portion de cercle antérieur
- 3: diamètre de la courbure de la portion de cercle postérieur
- 4: diamètre de l'âme centrale

Fig. 2b : section au talon :
- 1': longueur maximale de la section
- 2': diamètre de la courbure de la portion de cercle antérieur
- 3': diamètre de la courbure de la portion de cercle postérieur
- 4': diamètre de l'âme centrale

## Revendications

1. Instrument canalaire (10) destiné à préparer un logement pour un pivot à l'intérieur des racines dentaires comportant :
- une partie travaillante (12) s'étendant selon un axe longitudinal,
- une enveloppe tronconique de la partie travaillante (12) ayant selon une coupe transversale une section du type comprenant une portion de courbe antérieure (20) et une portion de courbe postérieure (30) réunies par deux portions de courbe latérales (40), un rayon de courbure (2) de la portion antérieure (20) étant supérieur ou égal à un rayon de courbure (3) de la portion postérieure (30),
- une lame hélicoïdale s'étendant depuis un talon jusqu'à une pointe de la partie travaillante ou une pluralité de lames réparties le long de la partie travaillante, chaque lame s'étendant dans un plan non parallèle à l'axe longitudinal et de préférence dans un plan sensiblement perpendiculaire à l'axe longitudinal, permettant une coupe des parois canalaires lors d'un déplacement longitudinal alternatif du dit instrument,
ladite enveloppe comprenant une face antérieure et une face postérieure réunies par deux faces latérales, la face antérieure et la face postérieure correspondant aux zones de l'enveloppe les plus éloignées l'une de l'autre, et dans lequel lesdites lames sont plus profondes et plus actives sur les faces antérieures et postérieures par rapport auxdites lames présentes sur les faces latérales.

2. Instrument selon la revendication 1 dans lequel les deux portions de courbe latérales sont planes.

3. Instrument selon l'une des revendications 1 ou 2 dans lequel la portion de courbe antérieure et la portion de courbe postérieure sont des portions de cercle.

4. Instrument selon la revendication 1 **caractérisé en ce qu'**il a une section de forme ovoïde ou elliptique.

5. Instrument selon l'une quelconque des revendications 1 à 4 dans lequel la ou les lames sont moins profondes au voisinage de la pointe qu'au voisinage du talon de la partie travaillante.

## Patentansprüche

1. Kanalinstrument (10), das bestimmt ist, eine Aufnahme für einen Zapfen im Innern der Zahnwurzeln zu präparieren, aufweisend:
- einen Arbeitsteil (12), der sich gemäß einer Längsachse erstreckt,
- eine kegelstumpfförmige Hülle des Arbeitsteils (12) mit einem Querschnitt gemäß einem transversalen Schnitt des Typs, der einen vorderen Kurvenabschnitt (20) und einen hinteren Kurvenabschnitt (30) umfasst, die durch zwei seitliche Kurvenabschnitte (40) zusammengeführt sind, wobei ein Krümmungsradius (2) des vorderen Abschnitts (20) größer oder gleich einem Krümmungsradius (3) des hinteren Abschnitts (30) ist,
- eine schraubenförmige Lamelle, die sich ab einem Absatz bis zu einer Spitze des Arbeitsteils erstreckt oder eine Vielzahl von Lamellen, die entlang des Arbeitsteils verteilt sind, wobei sich jede Lamelle in einer zur Längsachse nicht parallelen Ebene und vorzugsweise in einer Ebene, die zu Längsachse etwa senkrecht ist, erstreckt, was einen Schnitt der Kanalwände bei einer abwechselnden Längsverlagerung des Instruments erlaubt,
- wobei die Hülle eine Vorderseite und Rückseite umfasst, die durch zwei seitliche Seiten zusammengeführt sind, wobei die Vorderseite und die Rückseite den Zonen der Hülle entsprechen, die voneinander am weitesten entfernt sind und in welchen die Lamellen in Bezug zu den Lamellen, die auf den seitlichen Seiten vorhanden sind, auf der Vorder- und Rückseite tiefer und aktiver sind.

2. Instrument nach Anspruch 1, wobei die zwei seitlichen Kurvenabschnitte eben sind.

3. Instrument nach einem der Ansprüche 1 oder 2, wobei der vordere Kurvenabschnitt und der hintere Kurvenabschnitt Kreisabschnitte sind.

4. Instrument nach Anspruch 1, **dadurch gekennzeichnet, dass** es einen eiförmigen oder elliptischen Querschnitt hat.

5. Instrument nach einem der Ansprüche 1 bis 4, wobei die Lamelle(n) in der Nähe der Spitze weniger tief als in der Nähe des Absatzes des Arbeitsteils sind.

## Claims

1. A ductal instrument (10) intended to prepare a housing for a pivot inside dental roots including:
- a working part (12) extending along a longitudinal axis,
- a frustoconical enclosure of the working part (12) having, along a cross-section, a section of the type comprising an anterior curve portion (20) and a posterior curve portion (30) united by two lateral curve portions (40), a curve radius (2) of the anterior portion (20) being larger than or equal to a curve radius (3) of the posterior portion (30),
- a helical strip extending from a heel to a tip of the working part or a plurality of strips distributed along the working part, each strip extending in a plane not parallel to the longitudinal axis and preferably in a plane substantially perpendicular to the longitudinal axis, allowing cutting of ductal walls during an alternating longitudinal movement of said instrument,
- said enclosure comprising an anterior face and a posterior face united by two lateral faces, the anterior face and the posterior face corresponding to the zones of the enclosure furthest from one another, and in which said strips are deeper and more active on the anterior and posterior faces relative to said strips present on the lateral faces.

2. The instrument according to claim 1, wherein the two lateral curve portions are planar.

3. The instrument according to one of claims 1 or 2, wherein the anterior curve portion and the posterior curve portion are circle portions.

4. The instrument according to claim 1, **characterized in that** it has an ovoid or elliptical section.

5. The instrument according to any one of claims 1 to 4, **characterized in that** the strip (s) are shallower near the tip than near the heel of the working part.
